# EUROPEAN PATENT SPECIFICATION

(11) **EP 1 610 450 B1**
(45) Date of publication and mention of the grant of the patent: **14.11.2018**
(21) Application number: 05006572.1
(22) Date of filing: 24.03.2005
(51) Int. Cl.: H02M 1/14

(54) **Power converter system for railway vehicles**
Stromrichteranordnung für Schienenfahrzeuge
Système convertisseur de puissance pour véhicules de traction ferroviare

(30) Priority: 16.06.2004 JP 2004178114
(43) Date of publication of application: 28.12.2005
(73) Proprietor: Hitachi, Ltd., Chiyoda-ku Tokyo 100-8280 (JP)
(72) Inventor: Inarida, Satoru, Chiyoda-ku Tokyo 100-8220 (JP); Okawara, Hiroshi, Chiyoda-ku Tokyo 100-8220 (JP)
(74) Representative: Strehl Schübel-Hopf & Partner

(56) References cited:
- DE-A1- 1 563 054
- DE-U1- 29 510 986
- JP-A- 60 141 102
- JP-A- 62 250 893

## Description

### BACKGROUND OF THE INVENTION

### Field of the invention

The present invention relates to a power converter system for a railway vehicle that converts a direct-current power supply voltage from a direct-current power supply to an alternating-current voltage for driving an alternating-current motor to accelerate or decelerate a railway vehicle. More particularly, it relates to a technique for ensuring the reliability of a railway system by suppressing an interference current introduced from a power converter system for a railway vehicle to a track circuit for determining the presence or absence of a railway vehicle or to line side equipment such as a signaling system or telecommunication system equipped on or near the railway track by suppressing a current caused by a ripple component of the direct-current power supply voltage and flowing into the power converter system for a railway vehicle and a ripple current produced by the power converter system for a railway vehicle itself and flowing out to the power supply system including the direct-current power supply.

### Description of the related art

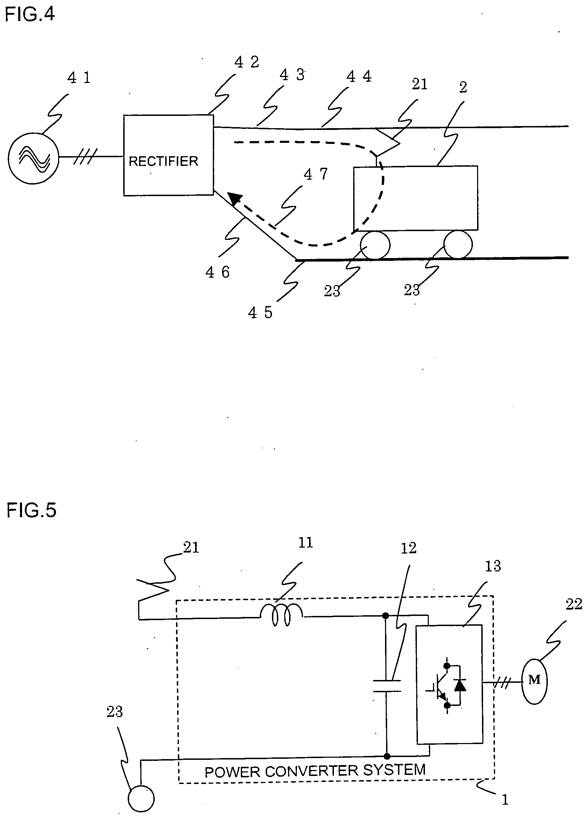

As an example, a relationship between a direct-current power supply and a railway vehicle will be described with reference to FIG. 4. A rectifier 42 converts a three-phase alternating-current voltage 41 into a direct-current voltage, and the direct-current voltage is applied between an aerial wire 44 and a rail 45 through wires 43 and 46. An electric railcar (vehicle) 2 obtains electric power for driving the vehicle itself and in-vehicle electronics by receiving the direct-current voltage applied between the aerial wire 44 and the rail 45 via a current collector 21 and a wheel 23. Typically, the output of the rectifier 42 contains a ripple component having a frequency 6 times higher than that of the three-phase alternating-current power supply 41, which is caused by rectification. Furthermore, due to a phase-to-phase imbalance of a semiconductor device or a reactor (not shown) of the rectifier 42, the output contains a fundamental wave component of the three-phase alternating current 41, that is, the commercial frequency component. Here, the "commercial frequency" refers to the power supply frequency commonly used, which is 50 or 60 Hz in Japan, 50 Hz in Europe and 60 Hz in the United States.

Now, as an example, an arrangement of a power converter system for a railway vehicle will be described with reference to FIG. 5. A power converter system 1 for a railway vehicle comprises: an inverter 13 that is composed of a plurality of semiconductor devices and converts a direct current from the current collector 21 to an alternating current for driving an alternating-current motor 22; and a filter circuit that is composed of a filter reactor 11 and a filter capacitor 12, prevents a high-frequency component caused by switching of the inverter 13 from flowing out to the power supply system and absorbs a ripple component of the input direct - current voltage to stabilize the direct-current voltage supplied to the inverter.

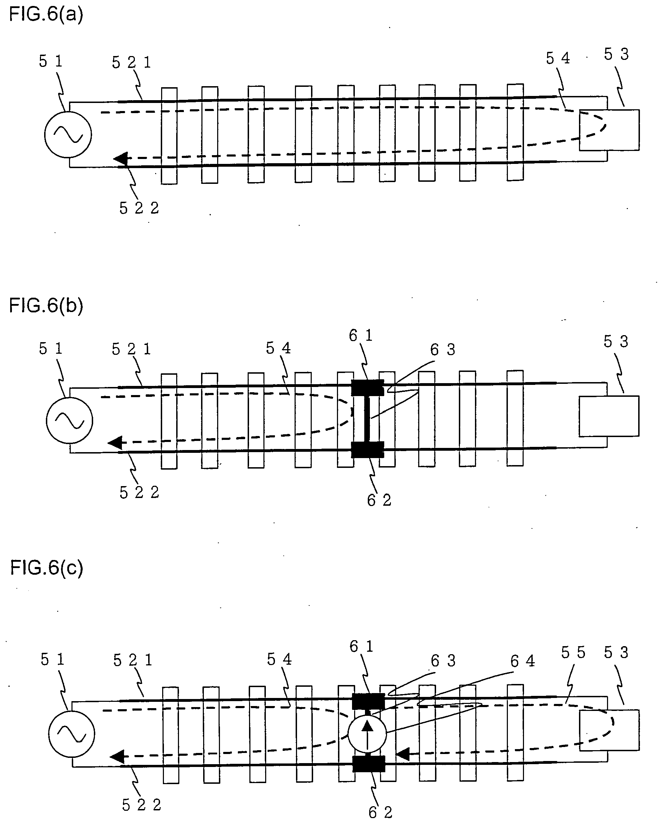

On the other hand, a track circuit that determines whether a train exists in a particular section is installed on the ground. A basic principle of the operation of the track circuit will be described with reference to FIG. 6. A voltage from a power supply 51 is applied between rails 521 and 522 on one side of the rails, and the voltage between the rails 521 and 522 is measured on the other side by a vehicle detector 53 to determine whether a train exists in the section defined by the rails 521 and 522. If no train exists in the relevant section (as shown in FIG. 6(A)), the level of the voltage detected by the vehicle detector 53 at the detection end is substantially the same as that of the power supply voltage. If a train exists in the relevant section (as shown in FIG. 6(B)), the left and right rails 521 and 522 are short-circuited by wheels 61 and 62 and an axle 63, and thus, no voltage is detected by the train detector 53 at the detection end. Based on this principle, the train detector 53 determines that no train exists when the voltage detected at the detection end is equal to or higher than a predetermined threshold, and determines that a train exists when the voltage detected is equal to or lower than the threshold. The vehicle detector 53 determines the presence or absence of a train by detecting only the frequency component of the power supply 51 in order to enhance the reliability and anti-noise characteristics of the track circuit.

Furthermore, based on the output of the vehicle detector 53, the track circuit controls a signaling system and determines the position of a train. Thus, the track circuit is highly important for ensure the railway safety. In the past, as the power supply for the track circuit, a direct - current power supply was commonly used in an alternating-current feeding section in which an alternating-current power supply supplies electric power to the train, and an alternating-current power supply was commonly used in a direct-current feeding section in which a direct-current power supply supplies electric power to the train, because the power supply can be readily arranged. In recent years, due to the development of the power conversion technology and the signal amplification technology, a higher-frequency alternating-current power supply or a modulated signal has come into use.

Since the three-phase alternating-current power supply for providing a direct current in the direct-current feeding section shown in FIG. 4 is also at the commercial frequency, the aerial wire voltage also contains the frequency used by the track circuit due to the presence of the ripple described above. Therefore, if the input impedance of the power converter system at the commercial frequency is not sufficiently high, a current component of the same frequency as that used by the track circuit flows through the rails due to the ripple component of the commercial frequency contained in the direct-current voltage, which may cause malfunction of the train detector 53.

That is, as shown in FIG. 6(C) , if the power converter system 1 for a railway vehicle shown in FIG. 5 is used, a high-frequency current component from a noise source 64 shown in FIG. 6(C), which is an equivalent of the noise component given to the track circuit from the power converter system 1 for a railway vehicle, flows in the form of an interference current 55 through the axle 63, the wheel 61, the rail 521, the vehicle detector 53, the rail 522, the wheel 62 and the axle 63 in this order, which makes it impossible to correctly determine the presence or absence of a train.

Thus, the power converter system has to have a sufficiently high input impedance at the commercial frequency. As a method of achieving this, the reactance of the filter reactor 11 shown in FIG. 5 may be increased. However, increasing the reactance to achieve the above-described impedance is inadequate in terms of equipment space and weight. In addition, in terms of control of the inverter 13, it is not preferable that the impedance of the LC filter circuit composed of the filter reactor 11 and the filter capacitor 12 increases.

As described above, according to the direct-current feeding method, the rectifier for providing the direct-current voltage may superimpose a component of the frequency of the alternating-current power supply on the direct-current output because of an imbalance of a component of the rectifier. On the other hand, the power-supply frequency may be used by the power supply for the track circuit that determines the present or absence of a train. If the impedance of the power converter system mounted on the vehicle at the power-supply frequency is low, a current of the power-supply frequency may flow through the power supply system including the track and adversely affect the operation of the track circuit. According to a conventional approach to this problem, an impedance-increasing filter circuit is additionally provided to increase the impedance. However, the impedance between the direct-current power supply and the inverter of the power converter system decreases, and thus, the high-frequency current caused by switching by the inverter and flowing out to the power supply system increases. In this way, there is a problem that this approach cannot be applied to the track circuit using a high frequency.

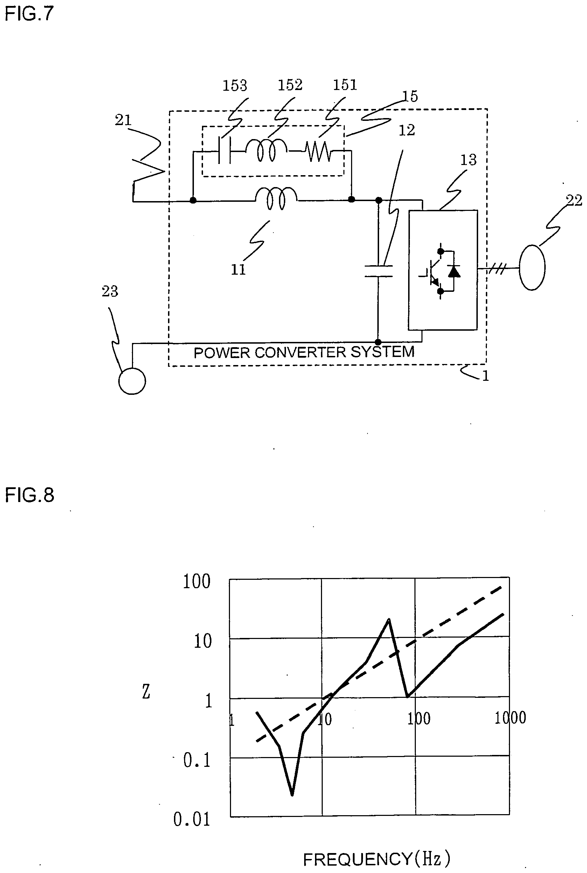

That is, to increase the impedance of the power converter system without increasing the reactance of the filter reactor, an approach shown in FIG. 7 has been widely used. Specifically, in the circuit shown in FIG. 7, an impedance-increasing filter circuit 15 that is composed of a reactor 152 and a capacitor 153 or of a reactor 152, a capacitor 153 and a resistor 151 and increases the impedance of the power converter system at the commercial frequency seen from the power supply side is connected in parallel with a filter reactor 11 of an LC filter circuit, thereby increasing the input impedance of the power converter system 1 at the commercial frequency without increasing the reactance of the filter reactor 11.

According to this approach, the impedance-increasing filter circuit 15 composed of the resistor 151, the reactor 152 and the capacitor 153 is connected in parallel with the filter reactor 11, and the resonant frequency of the resonant circuit composed of the filter reactor 11 and the impedance-increasing filter circuit 15 is made to match with the commercial frequency of the power supply from which the direct current is derived, thereby forming a parallel resonant circuit to increase the input impedance at the commercial frequency.

FIG. 8 shows characteristics of the input impedance of a power converter system seen from a direct-current input power supply with respect to the frequency, using the presence or absence of the impedance-increasing filter circuit 15 as a parameter. The solid line indicates an input impedance characteristic of the power converter system having the impedance-increasing filter circuit 15 connected in parallel with the filter reactor 11 as shown in FIG. 7, and the broken line indicates an input impedance characteristic of the power converter system having no impedance-increasing filter circuit 15 shown in Fig. 5. As shown by the solid line in FIG. 8, if the impedance-increasing filter circuit 15 is connected in parallel with the filter reactor 11, the impedance of the power converter system at the frequency contained in the direct -current power supply voltage can be increased even if the direct-current power supply voltage contains the commercial frequency component. Therefore, also if the ripple voltage of the commercial frequency is superimposed on the direct-current power supply voltage, the current component of the commercial frequency can be prevented from flowing through the rails and, therefore, from affecting the track circuit using the commercial-frequency power supply.

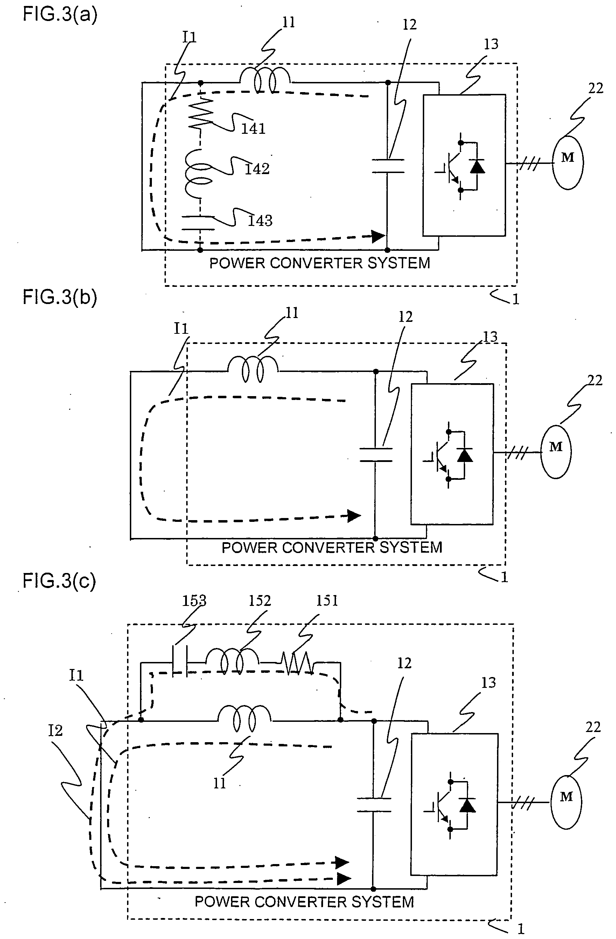

As described above, conventionally, as the power supply for a track circuit, the commercial power supply or a direct-current power supply is used. However, in recent years, due to the development of the power conversion technology and the signal amplification technology, a higher-frequency alternating-current power supply or a modulated voltage has come into use. In the case of the circuit having an additional impedance-increasing filter circuit 15 shown in FIG. 7, the impedance characteristic is deteriorated at frequencies higher than the commercial frequency as shown in FIG. 8. Thus, as shown in FIG. 3(C), of high-frequency current components produced by the inverter 13 of the power converter system 1, the current component flowing out to the power supply system (return current I1+I2) increases and may adversely affect the track circuit that uses a high-frequency alternating-current power supply. That is, in the case of the circuit shown in FIG. 7, there is a problem that the train cannot run in sections in which the track circuit uses a high-frequency alternating-current power supply, although the train can run without problems in sections in which the track circuit uses a commercial-frequency power supply.

As described above, the circuit shown in FIG. 7 cannot be used for a plurality of track circuits. Therefore, different types of vehicles (filter circuits) have to be used for the track circuits, so that more vehicles than is necessary have to be prepared. In addition, passengers who travel across the boundary between sections of different track circuit types are required to change trains at the boundary, and there is a problem that the customer service declines. JP 60-141102 A discloses a power converter system for a railway vehicle from which the pre-characterising first part of claim 1 starts out. Related systems are disclosed by DE 29510986 U1 and JP 62-250893 A.

### SUMMARY OF THE INVENTION

The invention provides a power system for a railway vehicle according to claim 1. Preferred embodiments are defined in the dependent claims.

An object of the present invention is to provide, in an electric railway system using a direct-current power supply, a power converter system for a railway vehicle that can be used both for a track circuit using the commercial power supply and a track circuit using a high-frequency alternating-current power supply without increasing the number of filter circuits and the weight of the filter circuit. In addition, an object of the present invention is to provide a power converter system for a railway vehicle that offers the railway vehicle higher versatility and reliability. The invention solves this object by a power converter system for a railway vehicle in accordance with the appended claims.

According to one feature of the present invention , an impedance-increasing filter circuit composed of a resistor, a reactor and a capacitor or composed of a reactor and a capacitor is connected in parallel with an LC filter circuit composed of a filter reactor and a filter capacitor, thereby increasing the impedance of a power converter system at the commercial frequency while keeping the impedance of a circuit composed of an inverter and a power supply system at the same level as in the case where no additional filter is provided.

Specifically, according to an embodiment of the present invention, there is provided a power converter system for a railway vehicle, comprising: a first filter circuit connected to a current collector that receives a direct-current voltage; and an inverter device that receives the direct-current voltage received by the current collector via the first filter circuit and converts the direct-current voltage into an alternating-current voltage for driving an alternating-current motor, in which a second filter that increases the input impedance at a power-supply frequency of an alternating-current power supply, which is a source of the direct-current voltage, is connected in parallel with the first filter.

According to an embodiment of the present invention, in the power converter system for a railway vehicle described above, the first filter is composed of a first reactor and a first capacitor, the current collector is connected to one end of the first reactor, the positive end of the first capacitor is connected to the other end of the first reactor, the negative end of the first capacitor is connected to the ground, and the voltage across the first capacitor is the direct-current voltage applied across the inverter.

According to an embodiment of the present invention, in the power converter system for a railway vehicle described above, the second filter is composed of a resistor, a second reactor and a second capacitor connected in series to each other or composed of a second reactor and a second capacitor connected in series to each other.

According to an embodiment of the present invention, in the power converter system for a railway vehicle described above, the resonant frequency of a resonant circuit composed of the first reactor, the first capacitor, the resistor, the second reactor and the second capacitor matches with the power-supply frequency of the alternating-current power supply.

According to an embodiment of the present invention, in the power converter system for a railway vehicle described above, the resonant frequency of a resonant circuit composed of the first reactor, the first capacitor, the second reactor and the second capacitor matches with the power-supply frequency of the alternating-current power supply.

Furthermore, according to an embodiment of the present invention, in the power converter system for a railway vehicle described above, the first filter is a circuit that serves to increase the input impedance of the power converter system for a railway vehicle at the power-supply frequency of the alternating-current power supply when the second filter is connected in parallel with the first filter.

As described above, according to an embodiment of the present invention, there is provided, in an electric railway system using a direct-current power supply, a power converter system for a railway vehicle that can be used both for a track circuit using the commercial power supply and a track circuit using a high-frequency alternating-current power supply without increasing the number of filter circuits and the weight of the filter circuit. In addition, by using the power converter system for a railway vehicle according to the present invention, it is possible to offer the railway vehicle higher versatility and reliability. Therefore, the customer service can be improved.

In addition, there can be provided a highly versatile vehicle that can run in both the sections in which a track circuit using the commercial frequency power supply and in which a track circuit uses a high-frequency power supply in a direct-current feeding section. Thus, an increase of the number of vehicles can be avoided, and the customer service can be improved.

### BRIEF DESCRIPTION OF THE DRAWINGS

FIG. 1 is a diagram illustrating an arrangement of a power converter system for a railway vehicle according to the present invention;
FIG. 2 is a graph for illustrating a characteristic of the impedance between an inverter and a power supply of the power converter system for a railway vehicle;
FIG. 3 shows equivalent circuits of power converter systems for a railway vehicle;
FIG. 4 is a diagram illustrating a relationship between a power supply system for a railway vehicle and a railway vehicle;
FIG. 5 is a diagram illustrating an arrangement of a conventional power converter system for a railway vehicle;
FIG. 6 illustrates relationships between a vehicle and a track circuit;
FIG. 7 is a diagram illustrating an arrangement of a conventional power converter system for a railway vehicle; and
FIG. 8 is a graph for illustrating a characteristic of the impedance of the power converter system for a railway vehicle seen from the power supply side.

### DETAILED DESCRIPTION OF THE PREFERRED EMBODIMENTS

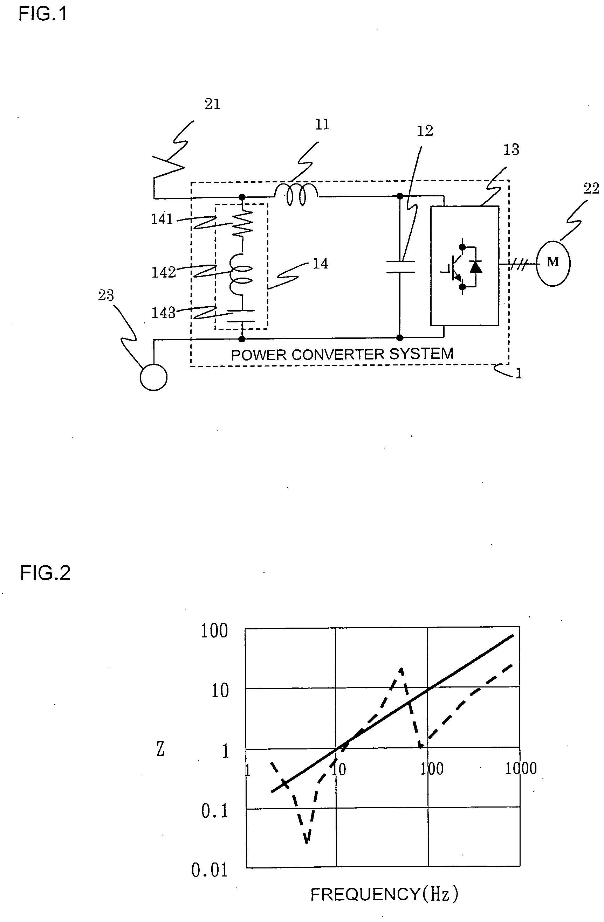

In the following, a power converter system 1 for a railway vehicle according to an embodiment of the present invention will be described with reference to FIG. 1. As shown in FIG. 1, the power converter system 1 for a railway vehicle according to the present invention comprises: an LC filter circuit composed of a filter reactor 11 and a filter capacitor 12; an inverter 13 for driving an alternating-current motor 22; and an impedance-increasing filter circuit 14 composed of a series circuit of a resistor 141, a reactor 142 and a capacitor 143. The filter reactor 11 is connected in series between a current collector 21 and an input of the inverter 13. The filter capacitor 12 is connected in parallel with the inputs of the inverter 13.

The inverter 13 is composed of a plurality of semiconductor devices and converts a direct current to an alternating current for driving the alternating-current motor 22. The LC filter circuit composed of the filter reactor 11 and the filter capacitor 12 prevents a high-frequency component caused by switching by the inverter 13 from flowing out to a power supply system and absorbs a ripple component of the input direct-current voltage to stabilize the direct-current voltage supplied to the inverter. The impedance-increasing filter circuit 14 composed of the resistor 141, the reactor 142 and the capacitor 143 is connected to an input side of the filter reactor 11 and to a negative side (for grounding) of the filter capacitor 12. The combination of the filter reactor 11 and filter capacitor 12 increases the impedance of the power converter system at a particular frequency seen from the input side.

An impedance characteristic of the circuit shown in FIG. 1 seen from the input side is shown by the solid line in FIG. 2, and it can be seen that the impedance characteristic is the same as that of the circuit shown in FIG. 5. Here, if the resonant frequency of the resonant circuit composed of the filter reaction 11, the filter capacitor 12, the reactor 142, the capacitor 143 and the resistor 141 is made to match with the commercial frequency, the input impedance of the power converter system 1 at the commercial frequency can be increased dramatically. The broken line in FIG. 2 indicates an impedance characteristic of the circuit shown in FIG. 7, which is the same as that shown by the solid line in FIG. 8.

In the case of the circuit shown in FIG. 7, a high-frequency current component produced by the inverter 13 via the filter circuit 15 is introduced into the power supply system as a return current I1 passing through the filter reactor 11 and a return current I2 passing through the filter circuit 15 (see FIG. 3C) . However, in the case of the circuit shown in FIG. 1, the impedance of the power supply system is sufficiently lower than that of the filter reactor 11 and, thus, can be ignored. As a result, the equivalent circuit of the power converter system shown in FIG. 1 has a configuration shown in FIG. 3(A) in which the filter circuit 14 is short-circuited by a line. Thus, the equivalent circuit of the power converter system is the same as the circuit having no filter circuit 14 shown in FIG. 3(B). Therefore, the impedance characteristic of the power converter system 1 between the input terminal and the inverter is the same as that of the circuit shown in FIG. 5 (FIG. 3(B)). From this fact, it can be seen that the additional input-impedance-increasing filter circuit 15 does not affect the amount of the harmonic component produced by the inverter.

Thus, according to the present invention, the impedance of the power converter system at the commercial frequency seen from the input side can be increased without increasing the high-frequency current component produced by the inverter and flowing out to the power supply system.

In the example shown in FIG. 1, the impedance-increasing filter circuit 14 is composed of the resistor 141, the reactor 142 and the capacitor 143. However, the impedance-increasing filter circuit 14 composed of only the reactor 142 and the capacitor 143 can provide the same advantage. In addition, the components of the impedance-increasing filter circuit 14 need not be the reactor 142 and the capacitor 143, as far as they form a circuit that can provide the same impedance characteristic as the impedance-increasing filter circuit 14, such as a circuit capable of signal amplification.

In the example described above, the embodiment and advantages of the present invention have been described taking as an example a method of obtaining electric power from a direct-current power supply via the aerial wire 44. However, the present invention can be applied to a third rail method in which a third rail is laid on the ground in addition to the traveling rails, and the vehicle obtains electric power from the direct-current power supply via the third rail.

## Claims

1. A power converter system for a railway vehicle, comprising:
a first filter circuit (11,12) having an input side connected to a current collector (21) that receives a direct-current voltage from a direct current power supply, and a grounding side connected to a track of the vehicle;
an inverter device (13) that receives the direct-current voltage received from said current collector via the first filter circuit and converts the direct-current voltage into an alternating-current voltage for driving an alternating-current motor (22); and
a second filter circuit (14) that comprises a reactor (142) and a capacitor (143) connected in series to each other and has one end connected to said input side of the first filter circuit and another end connected to the grounding side of the first filter circuit,
**characterised in that**
the second filter circuit (14) is adapted to match a resonant frequency of a circuit comprising the first and second filter circuits to a power-supply frequency of an alternating-current power supply which is a power source for said direct-current power supply, and to increase the input impedance at said power-supply frequency while preventing a high-frequency component produced by the inverter from flowing towards the power supply system.

2. The power converter system for a railway vehicle according to claim 1, **characterized in that** said first filter circuit is composed of a first reactor (11) and a first capacitor (12), said current collector (21) is connected to one end of said first reactor, the positive end of said first capacitor is connected to the other end of said first reactor, the negative end of said first capacitor is connected to ground, and the voltage across said first capacitor is the direct-current voltage applied across the inverter device (13); said reactor (142) and capacitor (143) of said second filter circuit (14) being a second reactor (142) and second capacitor (143), respectively.

3. The power converter system for a railway vehicle according to claim 2, **characterized in that** said second filter circuit (14) is composed of a resistor (141), said second reactor (142) and said second capacitor (143) connected in series to each other.

4. The power converter system for a railway vehicle according to claim 3, **characterized in that** the resonant frequency of a resonant circuit composed of said first reactor (11), said first capacitor (12), said resistor (141), said second reactor (142) and said second capacitor (143) matches with the power-supply frequency of said alternating-current power supply.

5. The power converter system for a railway vehicle according to claim 2, **characterized in that** the resonant frequency of a resonant circuit composed of said first reactor (11), said first capacitor (12), said second reactor (142) and said second capacitor (143) matches with the power-supply frequency of said alternating-current power supply.

## Patentansprüche

1. Energiewandlersystem für ein Schienenfahrzeug, umfassend:
eine erste Filterschaltung (11, 12) mit einer Eingangsseite, die mit einem Stromabnehmer (21) verbunden ist, der von einer Gleichstrom-Energieversorgung eine Gleichspannung entgegennimmt, und mit einer Erdungsseite, die mit dem Gleis des Fahrzeugs verbunden ist;
eine Invertervorrichtung (13), die über die erste Filterschaltung die vom Stromabnehmer entgegengenommene Gleichspannung empfängt und diese in eine Wechselspannung zum Antrieb eines Wechselstrommotors (22) wandelt; und
eine zweite Filterschaltung (14), die einen Reaktor (142) und einen Kondensator (143) umfasst, die zueinander in Reihe geschaltet sind, und ein mit der Eingangsseite der ersten Filterschaltung verbundenes eines Ende und ein mit der Erdungsseite der ersten Filterschaltung verbundenes anderes Ende aufweist,
**dadurch gekennzeichnet, dass**
die zweite Filterschaltung (14) eingerichtet ist, eine Resonanzfrequenz einer die erste und die zweite Filterschaltung umfassenden Schaltung einer Energierversorgungsfrequenz einer Wechselstrom-Energieversorgung anzupassen, die eine Energiequelle für die Gleichstrom-Energieversorgung ist, und die Eingangsimpedanz bei dieser Energieversorgungsfrequenz zu erhöhen, während verhindert wird, dass eine vom Inverter erzeugte Hochfrequenzkomponente zum Energieversorgungssystem strömt.

2. Energiewandlersystem für ein Schienenfahrzeug nach Anspruch 1, **dadurch gekennzeichnet, dass** die erste Filterschaltung aus einem ersten Reaktor (11) und einem ersten Kondensator (12) aufgebaut ist, der Stromabnehmer (21) mit einem Ende des Reaktors verbunden ist, das positive Ende des ersten Kondensators mit dem anderen Ende des ersten Reaktors verbunden ist, das negative Ende des ersten Kondensators mit Erde verbunden ist und die Spannung über dem ersten Kondensator die über der Invertervorrichtung (13) anliegende Gleichspannung ist; wobei der Reaktor (142) und der Kondensator (143) der zweiten Filterschaltung (14) entsprechender Weise ein zweiter Reaktor (142) und ein zweiter Kondensator (143) sind.

3. Energiewandlersystem für ein Schienenfahrzeug nach Anspruch 2, **dadurch gekennzeichnet, dass** die zweite Filterschaltung aus einem Widerstand (141), dem zweiten Reaktor (142) und dem zweiten Kondensator (143) aufgebaut ist, die in Reihe zueinander geschaltet sind.

4. Energiewandlersystem für ein Schienenfahrzeug nach Anspruch 3, **dadurch gekennzeichnet, dass** die Resonanzfrequenz einer Resonanzschaltung aus dem ersten Reaktor (11), dem ersten Kondensator (12), dem Widerstand (141), dem zweiten Reaktor (142) und dem zweiten Kondensator (143) auf die Energieversorgungsfrequenz der Wechselstrom-Energieversorgung passt.

5. Energiewandlersystem für ein Schienenfahrzeug nach Anspruch 2, **dadurch gekennzeichnet, dass** die Resonanzfrequenz einer Resonanzschaltung aus dem ersten Reaktor (11), dem ersten Kondensator (12), dem zweiten Reaktor (142) und dem zweiten Kondensator (143) auf die Energieversorgungsfrequenz der Wechselstrom-Energieversorgung passt.

## Revendications

1. Système de conversion d'énergie pour un véhicule ferroviaire, comprenant :
un premier circuit de filtrage (11, 12) présentant un côté d'entrée connecté à un collecteur de courant (21) qui reçoit une tension en courant continu depuis une source d'alimentation en courant continu, et un côté de mise à la masse connectée à une voie du véhicule ;
un dispositif onduleur (13) qui reçoit la tension en courant continu en provenance dudit collecteur de courant via le premier circuit de filtrage et convertit la tension en courant continu en une tension en courant alternatif pour entraîner un moteur à courant alternatif (22) ; et
un deuxième circuit de filtrage (14) qui comprend un réacteur (142) et un condensateur (143) connectés en série l'un à l'autre et comporte une extrémité connectée audit côté d'entrée du premier circuit de filtrage et une autre extrémité connectée au côté de mise à la masse du premier circuit de filtrage,
**caractérisé en ce que**
le deuxième circuit de filtrage (14) est adapté pour mettre en correspondance une fréquence de résonance d'un circuit comprenant les premier et deuxième circuits de filtrage et une fréquence d'alimentation d'une alimentation en courant alternatif qui est une source d'énergie pour ladite alimentation en courant continu, et pour augmenter l'impédance d'entrée à ladite fréquence d'alimentation tout en empêchant un composant haute fréquence produit par l'onduleur de s'écouler vers le système d'alimentation.

2. Système de conversion d'énergie pour un véhicule ferroviaire selon la revendication 1, **caractérisé en ce que** ledit premier circuit de filtrage est composé d'un premier réacteur (11) et d'un premier condensateur (12), ledit collecteur de courant (21) est connecté à une extrémité dudit premier réacteur, l'extrémité positive dudit premier condensateur est connectée à l'autre extrémité dudit premier réacteur, l'extrémité négative dudit premier condensateur est connectée à la masse, et la tension à travers ledit premier condensateur est la tension en courant continu appliquée à travers le dispositif onduleur (13) ; lesdits réacteur (142) et condensateur (143) dudit deuxième circuit de filtrage (14) étant un deuxième réacteur (142) et un deuxième condensateur (143), respectivement.

3. Système de conversion d'énergie pour un véhicule ferroviaire selon la revendication 2, **caractérisé en ce que** ledit deuxième circuit de filtrage (14) est composé d'une résistance (141), dudit deuxième réacteur (142) et dudit deuxième condensateur (143) connectés en série les uns aux autres.

4. Système de conversion d'énergie pour un véhicule ferroviaire selon la revendication 3, **caractérisé en ce que** la fréquence de résonance d'un circuit résonant composé dudit premier réacteur (11), dudit premier condensateur (12), de ladite résistance (141), et dudit deuxième réacteur (140) et dudit deuxième condensateur (143) correspond à la fréquence d'alimentation de ladite alimentation en courant alternatif.

5. Circuit de conversion d'énergie pour un véhicule ferroviaire selon la revendication 2, **caractérisé en ce que** la fréquence de résonance d'un circuit résonant composé dudit premier réacteur (11), dudit deuxième condensateur (12), dudit deuxième réacteur (142) et dudit deuxième condensateur (143) correspond à la fréquence d'alimentation de ladite alimentation en courant alternatif.
